# EUROPEAN PATENT APPLICATION

(11) **EP 4 842 053 A1**
(43) Date of publication of application: **18.11.2026**
(21) Application number: 24917215.6
(22) Date of filing: 11.01.2024
(51) Int. Cl.: H04W 28/16, H04W 16/28, H04W 84/12, H04W 88/08

(54) **ACCESS POINT**

(71) Applicant: NTT, Inc., Tokyo 100-8116 (JP)
(72) Inventor: OTANI, Hanae, Musashino-shi, Tokyo 180-8585 (JP); KISHIDA, Akira, Musashino-shi, Tokyo 180-8585 (JP); ASAI, Yusuke, Musashino-shi, Tokyo 180-8585 (JP); OGAWA, Tomoaki, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2024/000451
(87) International publication number: WO 2025/150151

(57) **Abstract**

An access point in an embodiment includes a communication circuit and a processor. The communication circuit is configured to be able to communicate with a plurality of access points. The processor is configured to determine whether or not each of the plurality of access points uses a spatial reuse function based on information of each of the plurality of access points and apply a setting of the spatial reuse function based on a determined result to the plurality of access points.

## Description

### Technical Field

Embodiments relate to an access point.

### Background Art

A wireless local area network (LAN) is known as a communication system that wirelessly connects an access point (AP) and a terminal apparatus. The terminal apparatus can access a network via an access point in a communicable area of the wireless LAN. In the ultra high reliability-study group (UHR-SG) that studies a next-generation wireless LAN system of IEEE802.11 standardization, a multi-AP function in which a plurality of access points operate in cooperation has been studied.

As one form of the multi-AP function, a plurality of second access points connected to a first access point cooperate to perform data communication between the first access point and a terminal apparatus. As a cooperative operation between the plurality of second access points, for example, there is offloading of distributing data exchanged between the first access point and a non-access point multi link device (non-AP_MLD) as traffic to each second access point. The non-AP_MLD corresponds to a functional block that manages wireless connection and the like using the multi-AP function in the terminal apparatus.

In the 802.11 standard, a coordinated-spatial reuse (Co-SR) function of performing coordinated-SR in the second access points has been studied in order to perform spatial reuse (SR) by utilizing the multi-AP function. Further, as a destination to which the Co-SR function is applied, Co-Beamforming, coordinated-orthogonal frequency division multiple access (Co-OFDMA), and the like have been studied.

### Citation List

### Non Patent Literature

Non Patent Literature 1: IEEE 802.11-23/0058r0, "Spatial Reuse in Coordinated M-AP for UHR", January 2023
Non Patent Literature 2: IEEE Std 802.11TM-2020, December 2020

### Summary of Invention

### Technical Problem

However, use scenes of Co-Beamforming, Co-OFDMA, and the like in which the Co-SR function is extended are limited in accordance with the degree of overlap of overlapping basic service sets (OBSSs). That is, determination of a region where it is better to use the Co-SR function or a region where it is better not to use the Co-SR function depends on an environment. For example, in a case where the degree of overlap of the OBSSs is large, it is preferable not to use the Co-SR function because the effect of power control obtained by using the Co-SR function is reduced.

In view of this, an object of the present invention is to provide an access point capable of determining whether or not the access point uses the Co-SR function and controlling on/off of the Co-SR function.

### Solution to Problem

An access point in an embodiment includes a communication circuit and a processor. The communication circuit is configured to be able to communicate with a plurality of access points. The processor is configured to determine whether or not each of the plurality of access points uses a spatial reuse function based on information of each of the plurality of access points and apply a setting of the spatial reuse function based on a determined result to the plurality of access points.

### Advantageous Effects of Invention

According to the present invention, it is possible to provide an access point capable of determining whether or not the access point uses a Co-SR function and controlling on/off of the Co-SR function.

### Brief Description of Drawings

Fig. 1 is a block diagram showing an example of an overall configuration of a communication system according to a first embodiment.
Fig. 2 is a block diagram showing an example of a hardware configuration of a sharing access point included in the communication system according to the first embodiment.
Fig. 3 is a block diagram showing an example of a hardware configuration of a shared access point included in the communication system according to the first embodiment.
Fig. 4 is a block diagram showing an example of a hardware configuration of a terminal apparatus included in the communication system according to the first embodiment.
Fig. 5 is a block diagram showing an example of a functional configuration of the sharing access point included in the communication system according to the first embodiment.
Fig. 6 is a block diagram showing an example of a functional configuration of the shared access point included in the communication system according to the first embodiment.
Fig. 7 is a block diagram showing an example of a functional configuration of the terminal apparatus included in the communication system according to the first embodiment.
Fig. 8 is a block diagram showing an example of a functional configuration of an affiliated STA included in the terminal apparatus included in the communication system according to the first embodiment.
Fig. 9 is a flowchart showing an example of a method of controlling on/off of a Co-SR function by the sharing access point included in the communication system according to the first embodiment.
Fig. 10 is a schematic diagram showing an example of a method of acquiring information used for determining on/off of the Co-SR function in the communication system according to the first embodiment.
Fig. 11 is a schematic diagram showing a first use condition of the Co-SR function in the communication system according to the first embodiment.
Fig. 12 is a schematic diagram showing a second use condition of the Co-SR function in the communication system according to the first embodiment.
Fig. 13 is a schematic diagram showing a third use condition of the Co-SR function in the communication system according to the first embodiment.
Fig. 14 is a schematic diagram showing a fourth use condition of the Co-SR function in the communication system according to the first embodiment.
Fig. 15 is a flowchart showing an example of a method of controlling on/off of a Co-SR function by a shared access point included in a communication system according to a second embodiment.
Fig. 16 is a schematic diagram showing an example of a method of acquiring information used for determining on/off of the Co-SR function in the communication system according to the second embodiment.
Fig. 17 is a schematic diagram showing a use condition of the Co-SR function in the communication system according to the second embodiment.
Fig. 18 is a block diagram showing an example of a configuration of a communication system according to a modification of the first embodiment.

### Description of Embodiments

Hereinafter, each embodiment will be described with reference to the drawings. Each embodiment exemplifies a device and a method for embodying the technical idea of the invention. The drawings are schematic or conceptual. Components that have substantially the same functions and configurations are denoted by the same reference signs. Numbers after characters constituting the reference signs are referred to by reference signs including the same characters and are used to distinguish between elements having similar configurations. Similarly, "hyphen + number" after the numbers constituting the reference signs is referred to by reference signs including the same numbers and is used to distinguish between elements having similar configurations.

Hereinafter, an "access point" will be appropriately abbreviated as "AP". In the present specification, the access point of a wireless LAN may be referred to as a "base station". In the present specification, a first access point in a multi-AP function is referred to as "sharing access point", and a second access point in the multi-AP function is referred to as "shared access point". In the present specification, using a Co-SR function corresponds to enabling (on state) the Co-SR function. Not using the Co-SR function corresponds to disabling (off state) the Co-SR function.

### <1> First Embodiment

In a communication system 1 according to a first embodiment, a sharing AP is configured to control on/off of the Co-SR function based on information of a subordinate shared AP. Hereinafter, details of the communication system 1 according to the first embodiment will be described.

### <1-1> Configuration

First, a configuration of the communication system 1 according to the first embodiment will be described. Hereinafter, description will be made on the assumption that multi-AP connection using the multi-AP function is established in the communication system 1.

### <1-1-1> Overall Configuration of Communication System 1

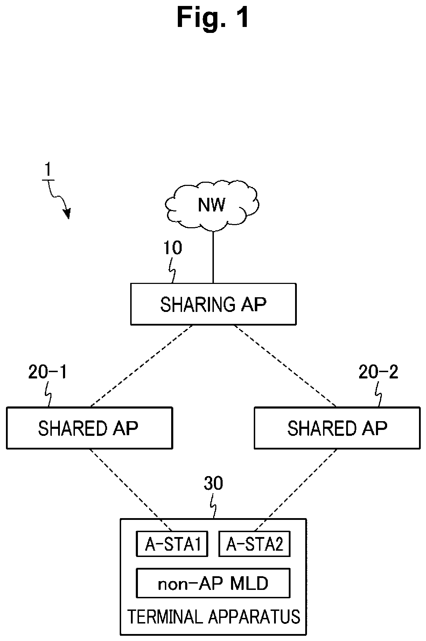

Fig. 1 is a block diagram showing an example of an overall configuration of the communication system 1 according to the first embodiment. As shown in Fig. 1, the communication system 1 includes a sharing AP 10, a plurality of shared APs 20, and a terminal apparatus 30.

The sharing AP 10 is a type of access point of the wireless LAN. The sharing AP 10 is connected to a network NW. The sharing AP 10 is configured to be able to perform wired communication or wireless communication with a server (not shown) on the network NW and perform wireless communication with each of the plurality of shared APs 20. The sharing AP 10 establishes multi-AP connection with a non-AP_MLD of the terminal apparatus 30.

The shared AP 20 is a type of access point of the wireless LAN. The shared AP 20 is configured to be able to perform wireless communication with the sharing AP 10 and the terminal apparatus 30. The plurality of shared APs 20 is installed at positions separated from each other and has different communicable areas. The communicable area of each of the shared APs 20 may have a portion overlapping with the communicable area of another shared AP 20. Fig. 1 shows two shared APs 20-1 and 20-2 connected to the sharing AP 10.

The terminal apparatus 30 is a wireless terminal such as a smartphone or a personal computer (PC). The terminal apparatus 30 includes a plurality of affiliated stations (affiliated STAs) (hereinafter, also referred to as "A-STAs") and the non-AP_MLD. The plurality of affiliated STAs includes an A-STA1 wirelessly connected to the shared AP 20-1 and an A-STA2 wirelessly connected to the shared AP 20-2. The wireless connection between the shared AP 20 and the affiliated STA corresponds to conventional connection between a pair of an access point and an STA. Each A-STA can switch a connection destination to another shared AP 20 as the terminal apparatus 30 moves. The non-AP_MLD is a multi-link device (MLD) that manages a link state and wireless communication of each of the plurality of A-STAs. The non-AP_MLD can establish multi-AP connection with the sharing AP 10 via the plurality of affiliated STAs and the plurality of shared APs 20 and exchange data and the like.

When the multi-AP connection is established in the communication system 1, information of the plurality of subordinate shared APs 20 of the sharing AP 10 and information of the plurality of subordinate affiliated STAs of the non-AP_MLD are exchanged between the sharing AP 10 and the non-AP_MLD. Therefore, the communication system 1 can collectively perform comprehensive connection on the plurality of shared APs 20 and the plurality of affiliated STAs between the sharing AP 10 and the non-AP_MLD.

The wireless communication used in the communication system 1 conforms to, for example, the IEEE 802.11 standard. The IEEE 802.11 standard has a wireless communication function based on an open systems interconnection (OSI) reference model. In the OSI reference model, the wireless communication function is divided into seven layers (first layer: physical layer, second layer: data link layer, third layer: network layer, fourth layer: transport layer, fifth layer: session layer, sixth layer: presentation layer, and seventh layer: application layer). The data link layer includes a logical link control (LLC) sublayer and a media access control (MAC) sublayer. As a frequency band used in the wireless communication of the communication system 1, for example, a 2.4 GHz band, a 5 GHz band, a 6 GHz band, a 45 GHz band, and a 60 GHz band can be used. A plurality of channels may be allocated to each frequency band. Different channels or the same channels are allocated to the A-STA1 and the A-STA2. The same frequency band may be used or different frequency bands may be used for the A-STA1 and the A-STA2.

### <1-1-2> Hardware Configuration of Communication System 1

Hereinafter, a hardware configuration of the communication system 1 according to the first embodiment will be described.

### (1: Hardware Configuration of Sharing AP 10)

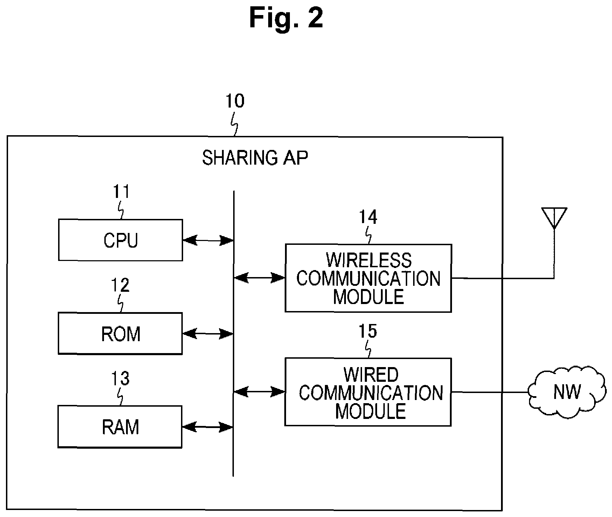

Fig. 2 is a block diagram showing an example of a hardware configuration of the sharing AP 10 included in the communication system 1 according to the first embodiment. As shown in Fig. 2, the sharing AP 10 includes, for example, a central processing unit (CPU) 11, a read only memory (ROM) 12, a random access memory (RAM) 13, a wireless communication module 14, and a wired communication module 15.

The CPU 11 is an integrated circuit capable of executing various programs and controls the entire operation of the sharing AP 10. The ROM 12 is, for example, a nonvolatile semiconductor memory and stores a program for controlling the sharing AP 10, control data, and the like. The RAM 13 is, for example, a volatile semiconductor memory and is used as a working area for the CPU 11. The wireless communication module 14 is configured to be able to transmit and receive a wireless signal via an antenna. The wireless communication module 14 is used to transmit and receive data and the like to and from each of the shared APs 20. The wired communication module 15 is a circuit used to transmit and receive data and the like with a wired signal. The wired communication module 15 is configured to be connectable to the network NW.

Note that the sharing AP 10 may have another hardware configuration. For example, in a case where the sharing AP 10 is wirelessly connected to the network NW, the wired communication module 15 may be omitted from the sharing AP 10. In a case where the sharing AP 10 is connected to the network NW in a wired manner, the wireless communication module 14 may be omitted from the sharing AP 10. The antenna may be built in the sharing AP 10 or may be externally connected.

### (2: Hardware Configuration of Shared AP 20)

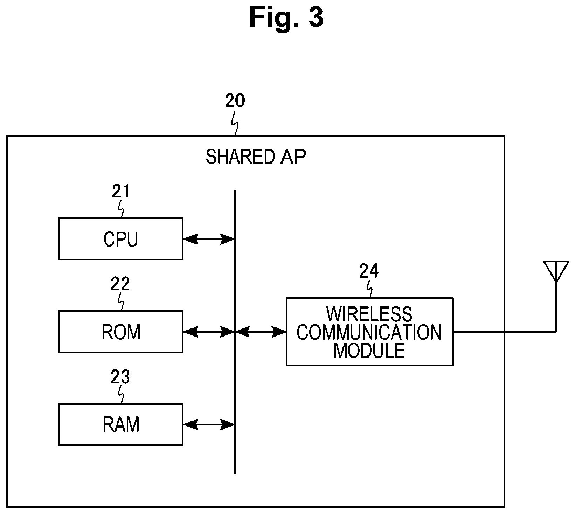

Fig. 3 is a block diagram showing an example of a hardware configuration of the shared AP 20 included in the communication system 1 according to the first embodiment. As shown in Fig. 3, the shared AP 20 includes, for example, a CPU 21, a ROM 22, a RAM 23, and a wireless communication module 24.

The CPU 21 is an integrated circuit capable of executing various programs and controls the entire operation of the shared AP 20. The ROM 22 is, for example, a nonvolatile semiconductor memory and stores a program for controlling the shared AP 20, control data, and the like. The RAM 23 is, for example, a volatile semiconductor memory and is used as a working area for the CPU 21. The wireless communication module 24 is configured to be able to transmit and receive a wireless signal via an antenna. The wireless communication module 24 is used to transmit and receive data and the like to and from the sharing AP 10 and transmit and receive data and the like to and from the terminal apparatus 30.

Note that the shared AP 20 may have another hardware configuration. For example, the antenna may be built in the shared AP 20 or may be externally connected. The shared AP 20 may be connected to the sharing AP 10 in a wired manner. In this case, the shared AP 20 further includes a wired communication module configured to be able to communicate with the sharing AP 10. Note that the communication system 1 may include both the shared AP 20 connected to the sharing AP 10 in a wired manner and the shared AP 20 wirelessly connected to the sharing AP 10.

### (3: Hardware Configuration of Terminal Apparatus 30)

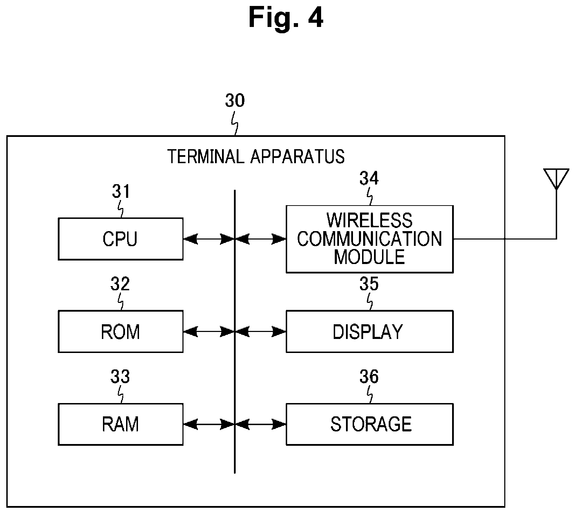

Fig. 4 is a block diagram showing an example of a hardware configuration of the terminal apparatus 30 included in the communication system 1 according to the first embodiment. As shown in Fig. 4, the terminal apparatus 30 includes, for example, a CPU 31, a ROM 32, a RAM 33, a wireless communication module 34, a display 35, and a storage 36.

The CPU 31 is an integrated circuit capable of executing various programs and controls the entire operation of the terminal apparatus 30. The ROM 32 is, for example, a nonvolatile semiconductor memory and stores a program for controlling the terminal apparatus 30, control data, and the like. The RAM 33 is, for example, a volatile semiconductor memory and is used as a working area for the CPU 31. The wireless communication module 34 is configured to be able to transmit and receive a wireless signal via an antenna. The wireless communication module 34 is used to transmit and receive data and the like to and from the shared APs 20. The display 35 is, for example, a liquid crystal display (LCD) or an electro-luminescence (EL) display. The display 35 displays, for example, a graphical user interface (GUI) corresponding to application software. The storage 36 is a nonvolatile storage device and stores, for example, system software or the like of the terminal apparatus 30.

Note that the terminal apparatus 30 may have another hardware configuration. For example, in a case where the terminal apparatus 30 is an Internet of Things (IoT) terminal or the like, the display 35 may be omitted from the terminal apparatus 30. The display 35 may have a function as an input interface of the terminal apparatus 30. The antenna may be built in the terminal apparatus 30 or may be externally connected.

### <1-1-3> Functional Configuration of Communication System 1

Hereinafter, a functional configuration of the communication system 1 according to the first embodiment will be described.

### (1: Functional Configuration of Sharing AP 10)

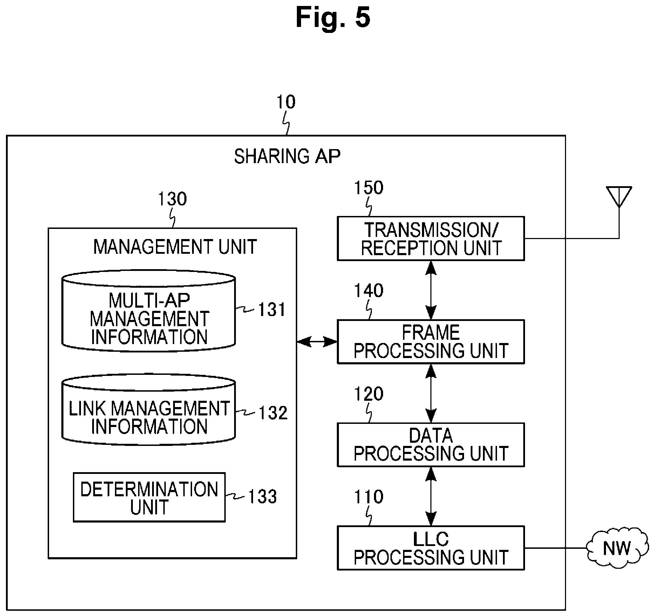

Fig. 5 is a block diagram showing an example of a functional configuration of the sharing AP 10 included in the communication system 1 according to the first embodiment. As shown in Fig. 5, the sharing AP 10 functions as a computer including an LLC processing unit 110, a data processing unit 120, a management unit 130, a frame processing unit 140, and a transmission/reception unit 150. The LLC processing unit 110 is a functional block that executes processing corresponding to the LLC sublayer of the second layer and the third layer to the seventh layer. The data processing unit 120, the management unit 130, and the frame processing unit 140 are functional blocks that execute processing corresponding to the MAC sublayer of the second layer. The transmission/reception unit 150 is a functional block that executes processing corresponding to the first layer.

The LLC processing unit 110 generates an LLC packet by adding, for example, a destination service access point (DSAP) header, a source service access point (SSAP) header, and the like to data received from the network NW. Then, the LLC processing unit 110 inputs the generated LLC packet to the data processing unit 120. Further, the LLC processing unit 110 extracts data from an LLC packet input from the data processing unit 120. Then, the LLC processing unit 110 transmits the extracted data to the network NW.

The data processing unit 120 generates a MAC frame by adding a MAC header to the LLC packet input from the LLC processing unit 110. Then, the data processing unit 120 inputs the generated MAC frame to the frame processing unit 140. Further, the data processing unit 120 extracts an LLC packet from a MAC frame input from the frame processing unit 140. Then, the data processing unit 120 inputs the extracted LLC packet to the LLC processing unit 110. Note that the MAC frame including data is also referred to as a "data frame".

The management unit 130 establishes wireless connection (wireless link) with the non-AP_MLD of the terminal apparatus 30 and performs mapping of the type of data and the link, setup of BlockAck, control of a coordinated-spatial reuse (Co-SR) function, and the like. For example, the management unit 130 executes multi-AP association processing in response to a multi-AP association request from the terminal apparatus 30. For example, in a case where the terminal apparatus 30 uses two A-STA1 and A-STA2, the A-STA1 establishes a wireless link with the shared AP 20-1, and the A-STA2 establishes a wireless link with the shared AP 20-2 by the multi-AP association processing.

Further, the management unit 130 includes multi-AP management information 131, link management information 132, and a determination unit 133. The multi-AP management information 131 includes information regarding the access points (that is, the sharing AP 10 and the shared APs 20-1 and 20-2) used for multi-AP connection and the terminal apparatus 30. For example, the multi-AP management information 131 is included for each terminal apparatus 30 that establishes the multi-AP connection. The link management information 132 includes information regarding a state of a link established in the multi-AP connection. The determination unit 133 determines whether to set the Co-SR function of the subordinate shared AP 20 to the on state (enabled) or the off state (disabled) based on information from the subordinate shared AP 20. Then, the sharing AP 10 notifies each shared AP 20 of the determination result. The information of the subordinate shared AP 20 may be stored in the management unit 130 or may be acquired from the subordinate shared AP 20. Further, the determination unit 133 detects a notification as to whether to use the Co-SR function transmitted from the subordinate shared AP 20.

In a case where a MAC frame is input from the data processing unit 120 or the management unit 130, the frame processing unit 140 outputs the input MAC frame to the transmission/reception unit 150. In a case where a MAC frame is input from the transmission/reception unit 150, the frame processing unit 140 outputs the input frame to the data processing unit 120 or the management unit 130 in accordance with the type of the frame. For example, in a case where a data frame is input from the transmission/reception unit 150, the frame processing unit 140 outputs the input frame to the data processing unit 120. In a case where a management frame or a control frame is input from the transmission/reception unit 150, the frame processing unit 140 outputs the input frame to the management unit 130. The management frame or the control frame includes, for example, management information. The management information can include notification information for any of the shared AP 20 and the terminal apparatus 30, control information regarding control of operation of any of the shared AP 20 and the terminal apparatus 30, and the like.

The transmission/reception unit 150 transmits and receives data, management information, and the like to and from each of the plurality of shared APs 20 belonging to the sharing AP 10. In the transmission/reception unit 150, for example, one wireless signal processing unit is provided for each of the plurality of shared APs 20 belonging to the sharing AP 10. The wireless signal processing units of the transmission/reception unit 150 transmit and receive wireless signals by using frequency bands or channels different from each other.

Each of the wireless signal processing units of the transmission/reception unit 150 generates a wireless frame by adding a preamble or the like to the MAC frame input from the frame processing unit 140 and converts the generated wireless frame into a wireless signal. Then, each wireless signal processing unit transmits (radiates) the converted wireless signal to the wirelessly connected shared AP 20 via the antenna. Further, each wireless signal processing unit of the transmission/reception unit 150 converts a wireless signal received from any one of the shared APs 20 via the antenna into a wireless frame. Then, each wireless signal processing unit extracts a MAC frame from the converted wireless frame and outputs the extracted MAC frame to the frame processing unit 140. Note that the transmission/reception unit 150 may use multicast or broadcast in a case of simultaneously notifying the plurality of shared APs 20. Multicast or broadcast is used for transmitting a beacon or the like, for example.

Note that the multi-AP management information 131 can include information regarding a frequency band, a channel, operation parameters, an access category, and the like. The information regarding the frequency band indicates, for example, a frequency band used for the wireless link by the A-STA. The information regarding the channel indicates, for example, a channel used for the wireless link by the A-STA. The information regarding the operation parameters includes, for example, CWmin, CWmax, an arbitration interframe space (AIFS), and a transmission opportunity (TXOP) Limit. CWmin and CWmax indicate a minimum value and a maximum value of a contention window, respectively. The contention window is a parameter used to calculate backoff that is a transmission wait time for collision avoidance. AIFS is a fixed transmission wait time set for each traffic access category. TXOP Limit indicates an upper limit value of a channel occupancy period TXOP. The information regarding the access category is indicated by, for example, "voice (VO)", "video (VI)", "best effort (BE)", "background (BK)", and "low latency (LL)". Further, the multi-AP management information 131 may store whether the Co-SR function of the subordinate shared AP 20 is enabled or disabled.

The link management information 132 can include information indicating whether the wireless link is enabled or disabled. The multi-AP management information 131 and the link management information 132 may be integrated. Based on the multi-AP management information 131, the frame processing unit 140 can output data and the like to be transmitted to the shared AP 20-1 to the wireless signal processing unit associated with the shared AP 20-1 and can output data and the like to be transmitted to the shared AP 20-2 to the wireless signal processing unit associated with the shared AP 20-2. The frame processing unit 140 may determine a transmission destination of the MAC frame input from data processing unit 120 in accordance with a traffic identifier (TID) associated with the access category. The processing of associating the TID with the link in this manner is also called "TID-link mapping". The transmission/reception unit 150 may include a wireless signal processing unit allocated to transmission and reception of data and the like and may include a wireless signal processing unit allocated to transmission of the management information.

### (2: Functional Configuration of Shared AP 20)

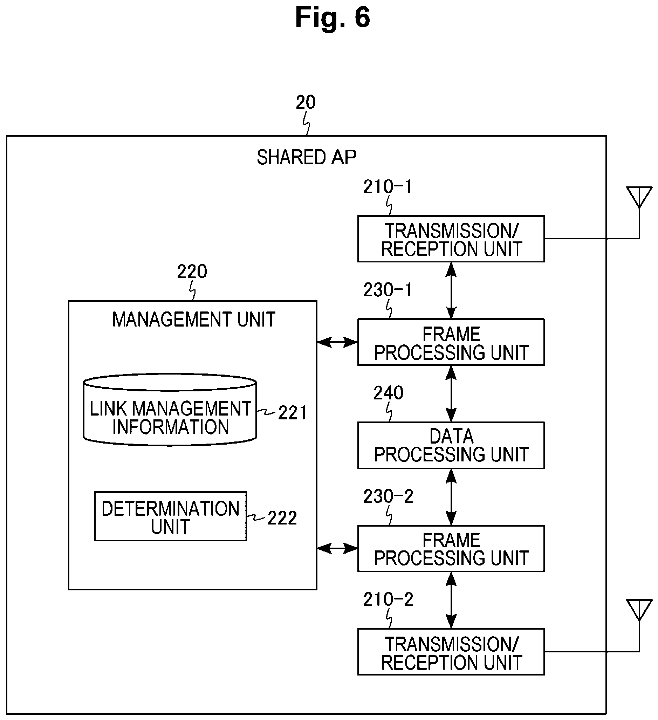

Fig. 6 is a block diagram showing an example of a functional configuration of the shared AP 20 included in the communication system 1 according to the first embodiment. As shown in Fig. 6, the shared AP 20 functions as a computer including, for example, transmission/reception units 210-1 and 210-2, a management unit 220, frame processing units 230-1 and 230-2, and a data processing unit 240. The transmission/reception units 210-1 and 210-2 are functional blocks that execute processing corresponding to the first layer. The management unit 220 and the frame processing units 230-1 and 230-2 are functional blocks that execute processing corresponding to the MAC sublayer of the second layer.

The transmission/reception unit 210-1 transmits and receives data, management information, and the like to and from the sharing AP 10 by wireless communication. The transmission/reception unit 210-2 transmits and receives data, management information, and the like to and from the terminal apparatus 30 by wireless communication. The transmission/reception units 210-1 and 210-2 are associated with the frame processing units 230-1 and 230-2, respectively. The transmission/reception unit 210-2 may use multicast or broadcast in a case of notifying the terminal apparatus 30. Multicast or broadcast is used for, for example, transmitting a beacon or the like including information regarding multi-AP connection. Each of the transmission/reception units 210-1 and 210-2 includes a wireless signal processing unit. Note that, in the shared AP 20, the wireless signal processing unit of the transmission/reception unit 210-1 and the wireless signal processing unit of the transmission/reception unit 210-2 are preferably configured to use different frequency bands or channels.

The wireless signal processing unit of the transmission/reception unit 210-1 generates a wireless frame by adding a preamble and the like to a MAC frame (data frame, management frame, and the like) input from the frame processing unit 230-1. Then, the wireless signal processing unit of the transmission/reception unit 210-1 converts the generated wireless frame into a wireless signal and transmits (radiates) the converted wireless signal to the sharing AP 10 via an antenna. Further, the wireless signal processing unit of the transmission/reception unit 210-1 converts a wireless signal received from the sharing AP 10 via the antenna into a wireless frame. Then, the wireless signal processing unit of the transmission/reception unit 210-1 extracts a MAC frame from the converted wireless frame and outputs the extracted MAC frame to the frame processing unit 230-1.

The wireless signal processing unit of the transmission/reception unit 210-2 generates a wireless frame by adding a preamble and the like to a MAC frame (data frame, management frame, and the like) input from the frame processing unit 230-2. Then, the wireless signal processing unit of the transmission/reception unit 210-2 converts the generated wireless frame into a wireless signal and transmits (radiates) the converted wireless signal to the terminal apparatus 30 via an antenna. Further, the wireless signal processing unit of the transmission/reception unit 210-2 converts a wireless signal received from the terminal apparatus 30 via the antenna into a wireless frame. The wireless signal processing unit of the transmission/reception unit 210-2 extracts a MAC frame from the converted wireless frame and outputs the extracted MAC frame to the frame processing unit 230-2.

The management unit 220 controls establishment of wireless connection (wireless link) between the sharing AP 10 and the non-AP_MLD of the terminal apparatus 30 in multi-AP connection. Based on a notification from the sharing AP 10, the management unit 220 performs generation and distribution of a beacon necessary for the multi-AP connection, management of a state of a wireless link between an A-AP of the shared AP 20 and the A-STA of the terminal apparatus 30 in the multi-AP connection, control of the coordinated-spatial reuse (Co-SR) function, and the like. The management unit 220 includes link management information 221 and a determination unit 222.

The link management information 221 stores management information regarding the state of the wireless link used in the multi-AP connection. The link management information 221 further includes, for example, an identifier of the sharing AP 10 to which the own station belongs and an identifier of the A-STA of the terminal apparatus 30 that establishes a wireless link with the own station. The link management information 221 may store information included in the multi-AP management information 131 and the link management information 132. The management unit 220 manages enablement and disablement of the wireless link by using the link management information 221. The determination unit 222 detects a signal from the subordinate terminal apparatus 30 and performs determination processing described later. In the determination processing, the determination unit 222 determines whether to set the Co-SR function to the on state (enabled) or the off state (disabled) based on information from the subordinate terminal apparatus 30. The information of the subordinate terminal apparatus 30 is acquired from the subordinate terminal apparatus 30. The determination unit 222 may notify the sharing AP 10 of the determination result. A specific method of using the determination unit 222 will be described in a second embodiment.

In a case where a MAC frame is input from the data processing unit 240, the frame processing unit 230-1 outputs the input MAC frame to the transmission/reception unit 210-1. In a case where a MAC frame is input from the transmission/reception unit 210-1, the frame processing unit 230-1 outputs the input MAC frame to the management unit 220 or the data processing unit 240 in accordance with the type of the frame. For example, in a case where a data frame is input from the transmission/reception unit 210-1, the frame processing unit 230-1 outputs the input frame to the data processing unit 240. In a case where a management frame or a control frame for the own station is input from the transmission/reception unit 210-1, the frame processing unit 230-1 outputs the input frame to the management unit 220.

In a case where a MAC frame is input from the data processing unit 240, the frame processing unit 230-2 outputs the input frame to the transmission/reception unit 210-2. In a case where a MAC frame is input from the transmission/reception unit 210-2, the frame processing unit 230-2 outputs the input MAC frame to the management unit 220 or the data processing unit 240 in accordance with the type of the frame. For example, in a case where a data frame is input from the transmission/reception unit 210-2, the frame processing unit 230-2 outputs the input frame to the data processing unit 240. In a case where a management frame or a control frame for the own station is input from the transmission/reception unit 210-2, the frame processing unit 230-2 outputs the input frame to the management unit 220.

The data processing unit 240 outputs the MAC frame input from the frame processing unit 230-1 to the frame processing unit 230-2. Further, the data processing unit 240 outputs the MAC frame input from the frame processing unit 230-2 to the frame processing unit 230-1.

### (3: Functional Configuration of Terminal apparatus 30)

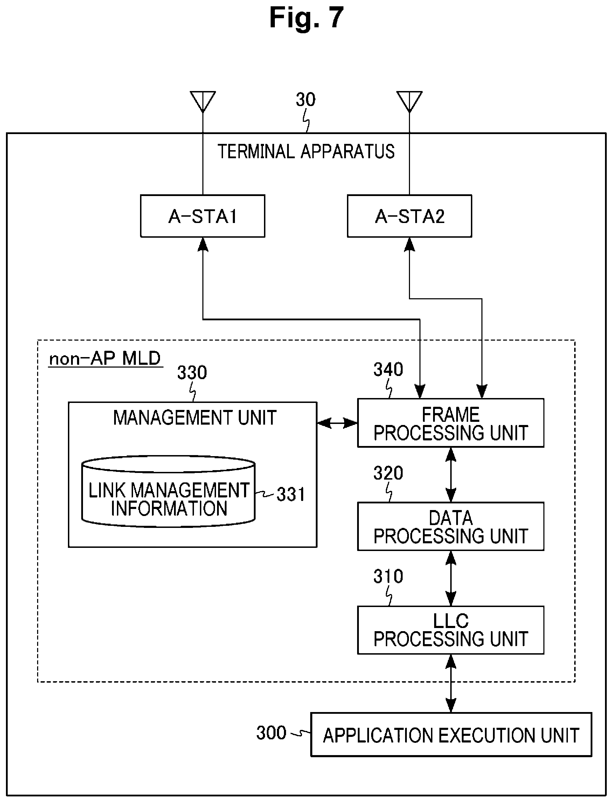

Fig. 7 is a block diagram showing an example of a functional configuration of the terminal apparatus 30 included in the communication system 1 according to the first embodiment. As shown in Fig. 7, the terminal apparatus 30 functions as a computer including, for example, an application execution unit 300, an LLC processing unit 310, a data processing unit 320, a management unit 330, a frame processing unit 340, the A-STA1, and the A-STA2. The application execution unit 300 is a functional block that executes processing corresponding to the seventh layer. The LLC processing unit 310 is a functional block that executes processing corresponding to the LLC sublayer of the second layer and the third layer to the sixth layer. The data processing unit 320, the management unit 330, and the frame processing unit 340 are functional blocks that execute processing corresponding to the MAC sublayer of the second layer. The A-STA1 and the A-STA2 are functional blocks that execute processing corresponding to the MAC sublayer of the second layer and the first layer. For example, a set of the LLC processing unit 310, the data processing unit 320, the management unit 330, and the frame processing unit 340 corresponds to the non-AP_MLD.

The application execution unit 300 executes an application based on data input from the LLC processing unit 310. Further, the application execution unit 300 outputs data to the LLC processing unit 310. For example, the application execution unit 300 can display information of the application on the display 35. Further, the application execution unit 300 can operate based on an operation of the input interface.

The LLC processing unit 310 generates an LLC packet by adding a DSAP header, an SSAP header, and the like to data input from the application execution unit 300 (upper layer). Then, the LLC processing unit 310 outputs the generated LLC packet to the data processing unit 320. Further, the LLC processing unit 310 extracts data from an LLC packet input from the data processing unit 320. Then, the LLC processing unit 310 outputs the extracted data to the application execution unit 300 (upper layer).

The data processing unit 320 generates a MAC frame by adding a MAC header to the LLC packet input from the LLC processing unit 310. Then, the data processing unit 320 outputs the generated MAC frame to the frame processing unit 340. Further, the data processing unit 320 extracts an LLC packet from a MAC frame input from the frame processing unit 340. Then, the data processing unit 320 outputs the extracted LLC packet to the LLC processing unit 310.

The management unit 330 performs establishment of wireless connection (wireless link) with the sharing AP 10, mapping of the type of data and the link, setup of BlockAck, and the like. The management unit 330 can acquire, for example, management information from a beacon received from the shared AP 20. The management unit 330 manages the state of the wireless link between the A-AP of the shared AP 20 and the A-STA of the terminal apparatus 30 in the multi-AP connection. The management unit 330 includes link management information 331.

The link management information 331 stores management information regarding the state of the wireless link used in the multi-AP connection. Further, the link management information 331 includes, for example, an identifier of the sharing AP 10 to which the own station belongs and an identifier of the shared AP 20 that establishes a wireless link with the own station. The link management information 331 may store information included in the multi-AP management information 131 and the link management information 132. The management unit 330 manages enablement and disablement of the wireless link by using the link management information 331.

In a case where a MAC frame is input from the data processing unit 320, the frame processing unit 340 outputs the input frame to at least one of the A-STA1 and the A-STA2 in accordance with allocation of traffic. In a case where a MAC frame is input from any of the A-STA1 and the A-STA2, the frame processing unit 340 outputs the input frame to the management unit 330 or the data processing unit 320 in accordance with the type of the frame. For example, in a case where a data frame is input from any of the A-STA1 and the A-STA2, the frame processing unit 340 outputs the input frame to the data processing unit 320. In a case where a data frame is input from the data processing unit 320, the frame processing unit 340 outputs the input frame to any one of the A-STA1 and the A-STA2. In a case where a management frame or a control frame for the own station is input from any of the A-STA1 and the A-STA2, the frame processing unit 340 outputs the input frame to the management unit 330.

The A-STA1 and the A-STA2 each have a function as a wireless signal processing unit configured to be able to transmit and receive data, management information, and the like to and from the shared AP 20 by wireless communication. The A-STA generates a wireless frame by adding a preamble and the like to the MAC frame input from the frame processing unit 340. Then, the A-STA converts the generated wireless frame into a wireless signal. Then, the A-STA transmits (radiates) the converted wireless signal to the wirelessly connected shared AP 20 via an antenna. Further, the A-STA converts a wireless signal received from the wirelessly connected shared AP 20 via the antenna into a wireless frame. The A-STA extracts a MAC frame from the converted wireless frame and outputs the extracted MAC frame to the frame processing unit 340.

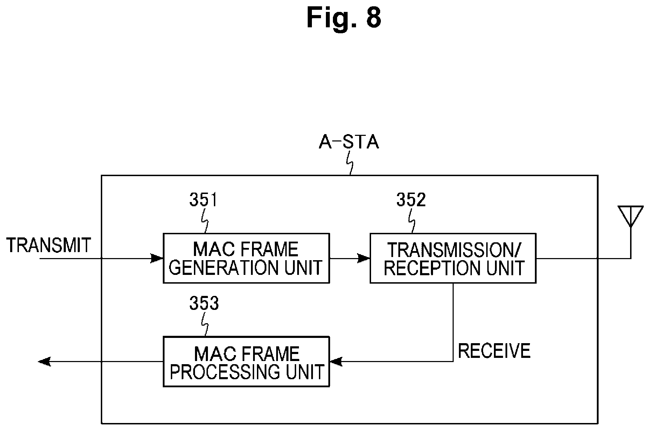

Fig. 8 is a block diagram showing an example of a functional configuration of the affiliated STA (A-STA) included in the terminal apparatus 30 included in the communication system 1 according to the first embodiment. As shown in Fig. 8, the A-STA includes a MAC frame generation unit 351, a transmission/reception unit 352, and a MAC frame processing unit 353.

The MAC frame generation unit 351 generates a MAC frame by adding a MAC header or the like to data or the like input from the frame processing unit 340 and outputs the MAC frame to the transmission/reception unit 352. The MAC header includes a sequence number SN allocated to identify data. That is, the sequence number SN is output together with the data from a transmission buffer of the non-AP_MLD.

The transmission/reception unit 352 wirelessly processes and transmits the MAC frame input from the MAC frame generation unit 351. Meanwhile, the transmission/reception unit 352 extracts a MAC frame from a wireless signal received via the antenna and outputs the MAC frame to the MAC frame processing unit 353.

The MAC frame processing unit 353 determines whether the MAC frame input from the transmission/reception unit 352 has been correctly received based on a frame check sequence. Then, the MAC frame processing unit 353 outputs the correctly received data to the frame processing unit 340 of the non-AP_MLD.

### <1-2> Operation

Next, an operation of the communication system 1 according to the first embodiment will be described.

### <1-2-1> Method of Controlling On/Off of Co-SR Function

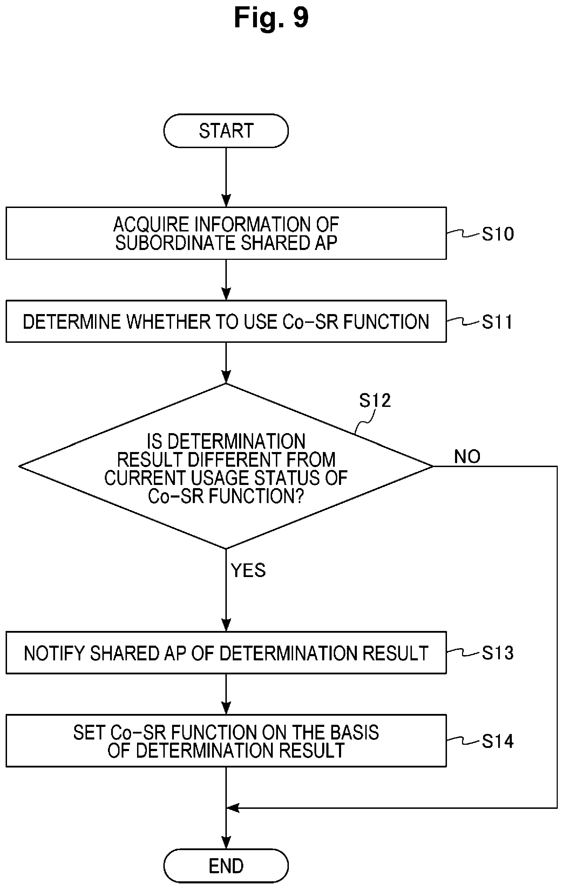

Fig. 9 is a flowchart showing an example of a method of controlling on/off of the Co-SR function by the sharing AP 10 included in the communication system 1 according to the first embodiment.

For example, the sharing AP 10 periodically executes a series of processing in Fig. 9 based on a predetermined schedule (start). The series of processing in Fig. 9 may be started based on a user operation or may be started based on a predetermined trigger.

First, the sharing AP 10 acquires information of the subordinate shared AP 20 (step S10). Details of the information of the subordinate shared AP 20 will be described later.

Next, the sharing AP 10 determines whether to use the Co-SR function (step S11). Specifically, the determination unit 133 of the sharing AP 10 executes determination processing. In the determination processing, the determination unit 133 determines whether to set the Co-SR function to the on state or the off state by using the information of the subordinate shared AP 20 acquired by the processing in step S10 and a use condition of the Co-SR function set in advance.

Next, the sharing AP 10 confirms whether or not the determination result is different from a current usage status of the Co-SR function (step S12). At this time, the determination unit 133 acquires the current usage status of the Co-SR function from, for example, the link management information 132.

When it is confirmed in the processing of step S12 that the determination result is the same as the current usage status of the Co-SR function (step S12: NO), the sharing AP 10 ends the series of processing in Fig. 9 (end). For example, in a case where the Co-SR function is enabled in the subordinate shared AP 20, and the determination result of step S11 indicates that the Co-SR function is enabled, the sharing AP 10 maintains a current setting of the Co-SR function of the subordinate shared AP 20.

When it is confirmed in the processing of step S12 that the determination result is different from the current usage status of the Co-SR function (step S12: YES), the sharing AP 10 notifies the shared AP 20 of the determination result (step S13).

After the processing in step S13, the sharing AP 10 sets the Co-SR function based on the determination result (step S14). Thereafter, the sharing AP 10 ends the series of processing in Fig. 9 (end). For example, in a case where the Co-SR function is in the off state in the subordinate shared AP 20, and the determination result of step S11 indicates that the Co-SR function is set to the on state, the sharing AP 10 sets the Co-SR function of the subordinate shared AP 20 to the on state by the processing in step S14.

### <1-2-2> Method of Collecting Information Used for Determining On/Off of Co-SR Function

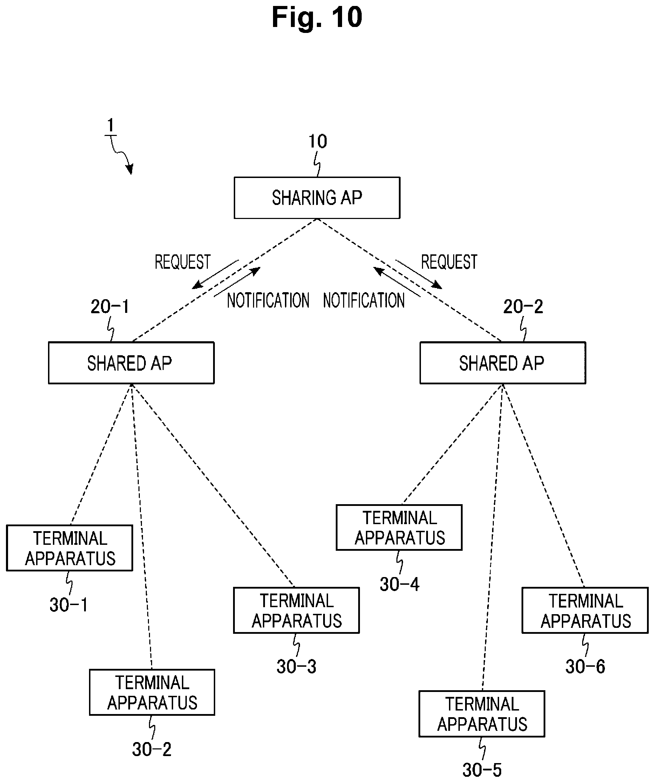

Fig. 10 is a schematic diagram showing an example of a method of acquiring information used for determining on/off of the Co-SR function in the communication system 1 according to the first embodiment. Hereinafter, as shown in Fig. 10, there will be described an example where the terminal apparatuses 30-1, 30-2, and 30-3 are connected to the shared AP 20-1, and the terminal apparatuses 30-4, 30-5, and 30-6 are connected to the shared AP 20-2. Note that the connection between the shared AP 20 and the terminal apparatuses 30 may be a multi-link or a single link.

As shown in Fig. 10, the sharing AP 10 transmits a wireless frame including a request to the subordinate shared AP 20 in order to collect information used for setting the Co-SR function. Then, the subordinate shared AP 20 notifies the sharing AP 10 of information used for determining on/off of the Co-SR function based on the received request. The sharing AP 10 may store the request in a beacon signal transmitted by multicast or broadcast or may transmit the request to each shared AP 20.

The shared AP 20 may store the information used for determining on/off of the Co-SR function in, for example, an element added to an action frame, a beacon frame format, or the like. The shared AP 20 can show an intention to use the Co-SR function to the sharing AP 10 by issuing the information by using such a wireless frame.

The shared AP 20 may add a block or an element for issuing information to a trigger frame or BlockAck and transmit the trigger frame or BlockAck. Further, the shared AP 20 may be configured to spontaneously notify the sharing AP 10 of information. In this case, transmission of a request regarding notification of the information to the shared AP 20 by the sharing AP 10 may be omitted.

### <1-2-3> Use Conditions of Co-SR Function

Hereinafter, an example of use conditions of the Co-SR function referred to in a determination operation will be described. Note that the communication system 1 shown in the drawings for describing the use conditions of the Co-SR function is configured as in Fig. 10.

### (1: First Use Condition)

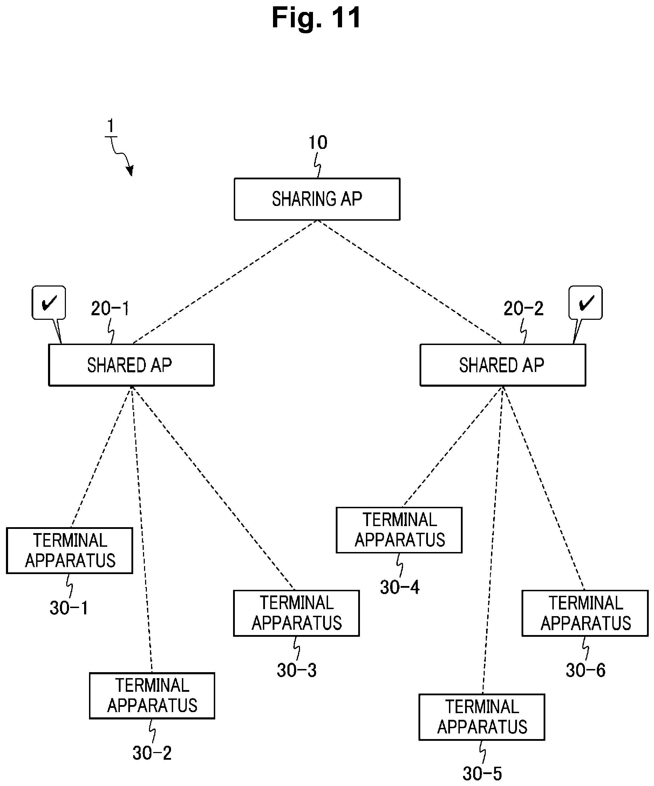

Fig. 11 is a schematic diagram showing a first use condition of the Co-SR function in the communication system 1 according to the first embodiment. The first use condition of the Co-SR function in the first embodiment is that the number of shared APs 20 that desire to use the Co-SR function is equal to or more than a predetermined number. In the example of Fig. 11, a condition in which the number of shared APs 20 that desire to use the Co-SR function is two or more is set as the first use condition of the Co-SR function.

In the present example, each of the shared APs 20-1 and 20-2 shows the intention to use the Co-SR function ("✔" in Fig. 11). Therefore, the sharing AP 10 instructs each of the shared APs 20-1 and 20-2 to enable the Co-SR function. Then, each of the shared APs 20-1 and 20-2 starts using the Co-SR function. In this manner, the sharing AP 10 can determine the use of the Co-SR function based on the number of shared APs 20 that desire to use the Co-SR function.

Note that, under the first use condition of the Co-SR function, each shared AP 20 may notify the sharing AP 10 of binary information indicating whether or not it is desired to use the Co-SR function. Further, each shared AP 20 may notify the sharing AP 10 of the intention to use the Co-SR function with a value larger than a binary number. For example, the degree of request of the Co-SR function is indicated by four stages of 0 to 3. In this case, the sharing AP 10 determines the use of the Co-SR function in accordance with, for example, the total degree of request of the Co-SR function of the subordinate shared APs 20 and a predetermined threshold.

### (2: Second Use Condition)

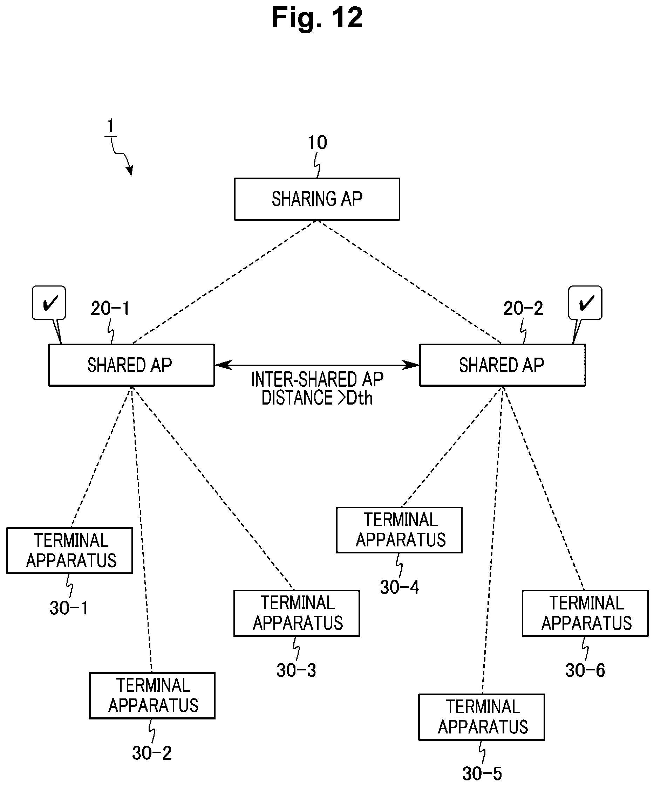

Fig. 12 is a schematic diagram showing a second use condition of the Co-SR function in the communication system 1 according to the first embodiment. The second use condition of the Co-SR function in the first embodiment is that a distance between the two shared APs 20 (inter-shared AP distance) is larger than a predetermined distance. In the example of Fig. 12, the inter-shared AP distance exceeding Dth is set as the second use condition of the Co-SR function. For example, Dth is set to a numerical value with which the effect of the power control can be favorably obtained in a case where the two shared APs 20 use the Co-SR function.

In the present example, the inter-shared AP distance between the shared APs 20-1 and 20-2 is larger than Dth. Therefore, the sharing AP 10 instructs each of the shared APs 20-1 and 20-2 to enable the Co-SR function. Then, each of the shared APs 20-1 and 20-2 starts using the Co-SR function. In this manner, the sharing AP 10 can determine the use of the Co-SR function based on the inter-shared AP distance. That is, the sharing AP 10 can determine the use of the Co-SR function based on positions of the shared APs 20.

The sharing AP 10 can estimate the position of the shared AP 20 in accordance with a power level of a signal received from the shared AP 20. Further, the sharing AP 10 may hold information of arrangement coordinates of each shared AP 20 in advance. In this case, the sharing AP 10 can calculate the inter-shared AP distance based on the information of the arrangement coordinates of each shared AP 20. Each shared AP 20 may include a global positioning system (GPS) and may be configured to notify the sharing AP 10 of position information acquired by the GPS. In this case, the sharing AP 10 can calculate the inter-shared AP distance based on the position information received from each shared AP 20.

The second use condition of the Co-SR function may also be used in a case where there are three or more shared APs 20. The processing of determining on/off the Co-SR function is executed, for example, for each shared AP 20 by using the inter-shared AP distance from the closest shared AP 20. The second use condition of the Co-SR function may be combined with the first use condition of the Co-SR function. In this case, the sharing AP 10 determines whether to use the Co-SR function of each shared AP 20 based on the number of shared APs 20 that desire to use the Co-SR function and the inter-AP distance between the shared APs 20.

### (3: Third Use Condition)

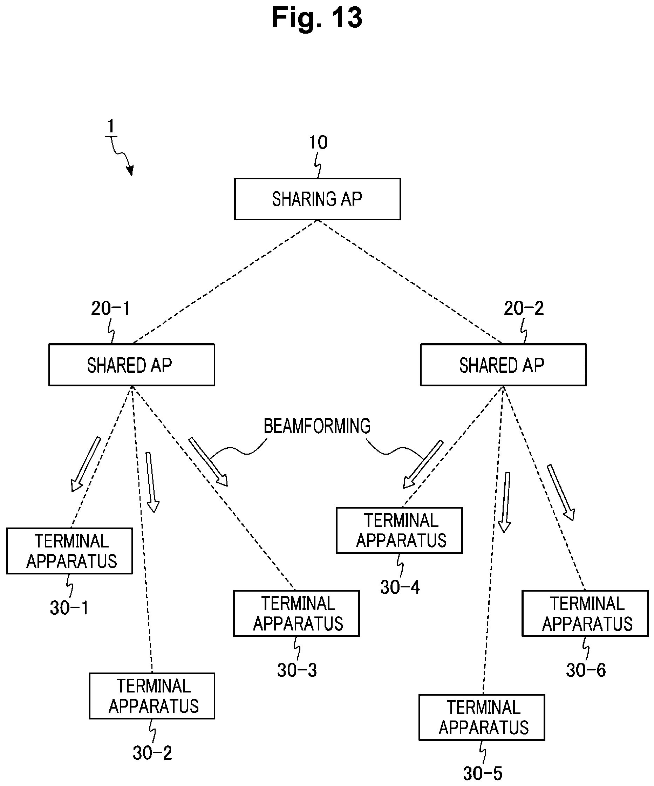

Fig. 13 is a schematic diagram showing a third use condition of the Co-SR function in the communication system 1 according to the first embodiment. The third use condition of the Co-SR function in the first embodiment is that the subordinate shared AP 20 uses beamforming. In the example of Fig. 13, each of the shared APs 20-1 and 20-2 uses beamforming. Therefore, the sharing AP 10 instructs each of the shared APs 20-1 and 20-2 to enable the Co-SR function. Then, each of the shared APs 20-1 and 20-2 starts using the Co-SR function. In this manner, the sharing AP 10 can determine the use of the Co-SR function in accordance with a setting of beamforming of the shared AP.

The sharing AP 10 may refer to a detailed setting of beamforming under the third use condition of the Co-SR function. For example, the sharing AP 10 can determine whether to enable the Co-SR function based on information of the signal directivity based on the setting of beamforming. In the third use condition of the Co-SR function, whether to enable the Co-SR function may be determined in accordance with the number of shared APs 20 using beamforming. For example, the sharing AP 10 enables the Co-SR function in a case where the number of shared APs 20 using beamforming exceeds a predetermined threshold.

### (4: Fourth Use Condition)

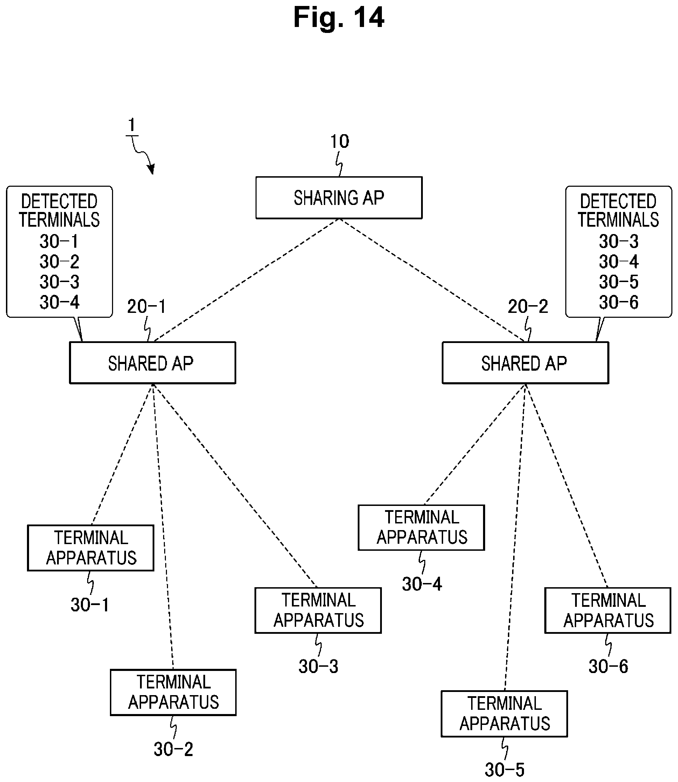

Fig. 14 is a schematic diagram showing a fourth use condition of the Co-SR function in the communication system 1 according to the first embodiment. The fourth use condition of the Co-SR function in the first embodiment is whether or not the number of terminal apparatuses 30 that are not detected by another shared AP 20 among the terminal apparatuses 30 detected by the shared AP 20 is equal to or more than a predetermined number. In the example of Fig. 14, a condition in which the number of terminal apparatuses 30 that are not detected by another shared AP 20 among the terminal apparatuses 30 detected by the shared AP 20 is two or more is set as the fourth use condition of the Co-SR function. Hereinafter, the terminal apparatus 30 detected by the shared AP 20 is referred to as a "detected terminal".

In the present example, the detected terminals of the shared AP 20-1 are terminal apparatuses 30-1, 30-2, 30-3, and 30-4. Meanwhile, the detected terminals of the shared AP 20-2 are the terminal apparatuses 30-3, 30-4, 30-5, and 30-6. In this case, the terminal apparatuses 30-3 and 30-4 overlap as the detected terminals of the shared APs 20-1 and 20-2. Therefore, among the terminal apparatuses 30 detected by the shared AP 20-1, the number of terminal apparatuses 30 not detected by the other shared AP 20-2 is two (terminal apparatuses 30-1 and 30-2). Similarly, among the terminal apparatuses 30 detected by the shared AP 20-2, the number of terminal apparatuses 30 not detected by the other shared AP 20-1 is two (terminal apparatuses 30-5 and 30-6).

The sharing AP 10 can grasp the number of undetected terminals of each shared AP 20 based on information of the detected terminals issued from the shared APs 20-1 and 20-2. In the present example, because the number of undetected terminals of each shared AP 20 is two or more, the sharing AP 10 instructs each of the shared APs 20-1 and 20-2 to enable the Co-SR function. Then, each of the shared APs 20-1 and 20-2 starts using the Co-SR function. In this manner, the sharing AP 10 can determine the use of the Co-SR function based on the number of terminal apparatuses 30 that are not detected by another shared AP 20 among the terminal apparatuses 30 detected by the shared AP 20.

In other words, the sharing AP 10 compares the number of terminal apparatuses 30 that can be detected for each shared AP 20. Then, the sharing AP 10 determines imbalance of arrangement of the terminal apparatuses 30 and determines to enable the Co-SR function in a case where the imbalance exceeds a certain threshold, that is, in a case where the number of terminal apparatuses 30 equal to or more than the threshold cannot be detected from each other.

The shared AP 20 can determine whether or not the terminal apparatus 30 has been detected based on a received power value. For example, the shared AP 20 may regard a transmission source of a signal that has been successfully subjected to preamble demodulation with received power equal to or more than -62 dBm as the detected terminal apparatus 30.

### <1-3> Effects of First Embodiment

As described above, in the communication system 1 according to the first embodiment, the sharing AP 10 can determine on/off of the Co-SR function based on the information of the subordinate shared AP 20 and change the setting of the Co-SR function to be applied to the shared AP 20. As a result, the communication system 1 according to the first embodiment can efficiently use the Co-SR function and improve the effect of the power control.

### <2> Second Embodiment

In the communication system 1 according to a second embodiment, the shared AP 20 is configured to control on/off of the Co-SR function based on information of the subordinate terminal apparatus 30. Hereinafter, details of the communication system 1 according to the second embodiment will be described mainly in terms of differences from the first embodiment. Note that a configuration of the communication system according to the second embodiment is similar to that of the first embodiment.

### <2-1> Operation

Hereinafter, an operation of the communication system 1 according to the second embodiment will be described.

### <2-1-1> Method of Controlling On/Off of Co-SR Function

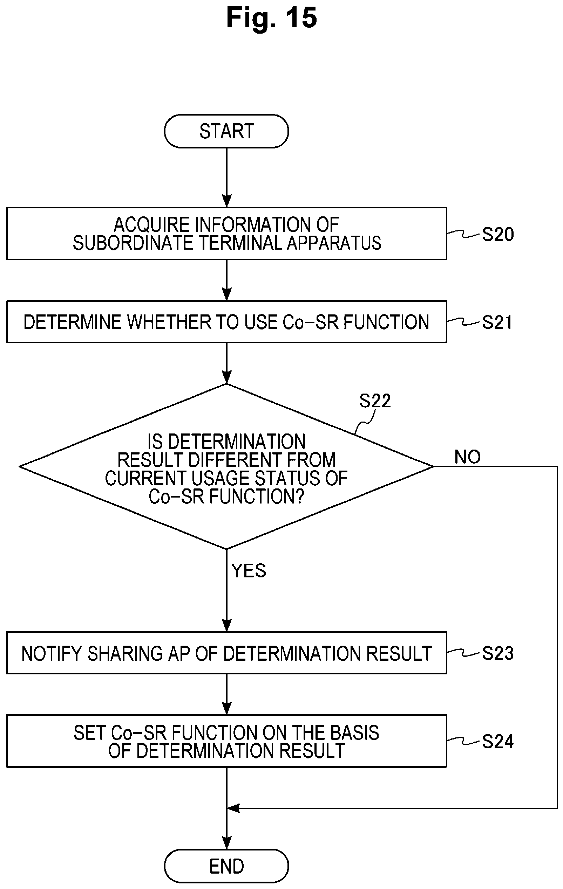

Fig. 15 is a flowchart showing an example of a method of controlling on/off of the Co-SR function by the shared AP 20 included in the communication system 1 according to the second embodiment.

For example, the shared AP 20 periodically executes a series of processing in Fig. 15 based on a predetermined schedule (start). The series of processing in Fig. 15 may be started based on a request from the sharing AP 10, may be started based on a user operation, or may be started based on a predetermined trigger.

First, the shared AP 20 acquires information of the subordinate terminal apparatus 30 (step S20). Details of the information of the subordinate terminal apparatus 30 will be described later.

Next, the shared AP 20 determines whether to use the Co-SR function (step S21). Specifically, the determination unit 222 of the shared AP 20 executes determination processing. In the determination processing, the determination unit 222 determines whether to set the Co-SR function to the on state or the off state by using the information of the subordinate terminal apparatus 30 acquired by the processing in step S20 and a use condition of the Co-SR function set in advance.

Next, the shared AP 20 confirms whether the determination result is different from a current usage status of the Co-SR function (step S22). At this time, the determination unit 222 acquires the current usage status of the Co-SR function from, for example, the link management information 331.

When it is confirmed in the processing of step S22 that the determination result is the same as the current usage status of the Co-SR function (step S22: NO), the shared AP 20 ends the series of processing in Fig. 15 (end). For example, in a case where the Co-SR function of the shared AP itself is enabled, and the determination result of step S21 indicates that the Co-SR function is enabled, the shared AP 20 maintains a current setting of the Co-SR function of the shared AP itself.

When it is confirmed in the processing of step S22 that the determination result is different from the current usage status of the Co-SR function (step S22: YES), the shared AP 20 notifies the sharing AP 10 of the determination result (step S23). The sharing AP 10 notified of the determination result updates the usage status of the Co-SR function in the shared AP 20 that is a transmission source of the determination result.

After the processing in step S23, the shared AP 20 sets the Co-SR function based on the determination result (step S24). Thereafter, the shared AP 20 ends the series of processing in Fig. 15 (end). For example, in a case where the Co-SR function of the shared AP itself is in the off state, and the determination result of step S21 indicates that the Co-SR function is set to the on state, the shared AP 20 sets the Co-SR function of the shared AP itself to the on state by the processing in step S24.

### <2-1-2> Method of Collecting Information Used for Setting Co-SR Function

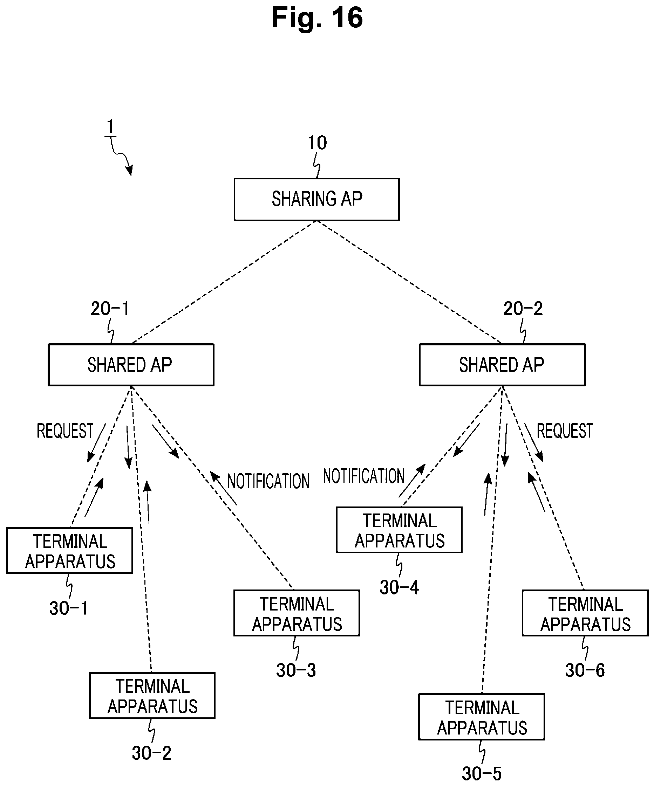

Fig. 16 is a schematic diagram showing an example of a method of acquiring information used for determining on/off of the Co-SR function in the communication system 1 according to the second embodiment.

As shown in Fig. 16, the shared AP 20 transmits a wireless frame including a request to the subordinate terminal apparatus 30 in order to collect information used for setting the Co-SR function. Then, the subordinate terminal apparatus 30 notifies the shared AP 20 of information used for determining on/off of the Co-SR function based on the received request. The shared AP 20 may store the request in a beacon signal transmitted by multicast or broadcast or may transmit the request to each terminal apparatus 30.

The terminal apparatus 30 may store information used for determining on/off of the Co-SR function in an element added to an action frame, a beacon frame format, or the like. The terminal apparatus 30 can show the intention to use the Co-SR function to the shared AP 20 by issuing the information by using such a wireless frame.

The terminal apparatus 30 may add a block or an element for issuing information to a trigger frame or BlockAck and transmit the trigger frame or BlockAck. Further, the terminal apparatus 30 may be configured to spontaneously notify the shared AP 20 of information. In this case, transmission of a request regarding notification of the information to the terminal apparatus 30 by the shared AP 20 may be omitted.

### <2-1-3> Use Conditions of Co-SR Function

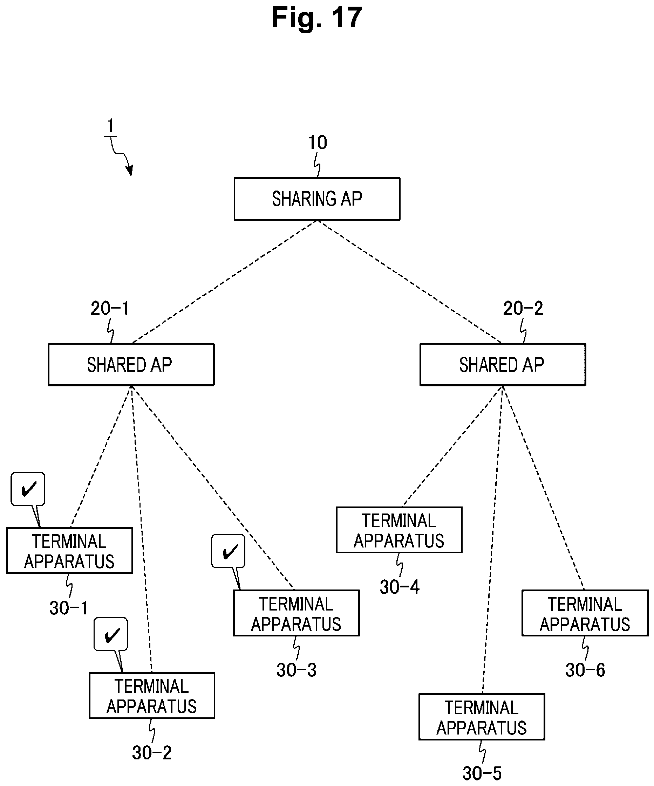

Fig. 17 is a schematic diagram showing the use condition of the Co-SR function in the communication system according to the second embodiment. The use condition of the Co-SR function in the second embodiment is, for example, whether or not the number of terminal apparatuses 30 that desire to use the Co-SR function is equal to or more than a predetermined number. In the example of Fig. 17, whether or not the number of terminal apparatuses 30 that desire to use the Co-SR function is three or more is set as the use condition of the Co-SR function.

In the present example, each of the terminal apparatuses 30-1, 30-2, and 30-3 connected to the shared AP 20-1 shows the intention to use the Co-SR function ("✔" in Fig. 17). Thus, the shared AP 20-1 spontaneously starts using the Co-SR function. Meanwhile, each of the terminal apparatuses 30-4, 30-5, and 30-6 connected to the shared AP 20-2 does not show the intention to use the Co-SR function. In this case, the shared AP 20-2 sets the Co-SR function to be disabled.

As described above, the shared AP 20 can determine the use of the Co-SR function based on the number of terminal apparatuses 30 that desire to use the Co-SR function without depending on an instruction from the sharing AP 10. Note that, under the use condition of the Co-SR function in the second embodiment, each terminal apparatus 30 may notify the shared AP 20 of binary information indicating whether or not it is desired to use the Co-SR function. Further, each terminal apparatus 30 may notify the shared AP 20 of the intention to use the Co-SR function with a value larger than a binary number. For example, the degree of request of the Co-SR function is indicated by four stages of 0 to 3. In this case, the shared AP 20 determines the use of the Co-SR function in accordance with, for example, the total degree of request of the Co-SR function of the subordinate terminal apparatuses 30 and a predetermined threshold.

The shared AP 20 may acquire information used for determining the use of the Co-SR function only from a specific terminal apparatus 30. In this case, the shared AP 20 determines the use of the Co-SR function based on the information acquired from the specific terminal apparatus 30. For example, the shared AP 20 designates, for example, the terminal apparatus 30 that is to perform transmission by beamforming as the terminal apparatus 30 used for determining the use of the Co-SR function. Further, the terminal apparatus 30 may spontaneously transmit the information used for determining the use of the Co-SR function to the shared AP 20.

As described above, the shared AP 20 may determine whether to use the Co-SR function separately from the setting of the Co-SR function set by the sharing AP 10. For example, even in a case where the shared AP 20 is not instructed to use the Co-SR function from the sharing AP 10, the shared AP 20 can use the Co-SR function in a case where the above-described use condition is satisfied. Note that, as the setting of on/off of the Co-SR function, a determination result by the sharing AP 10 may be prioritized, or a determination result by the shared AP 20 may be prioritized.

### <2-2> Effects of Second Embodiment

In the communication system 1 according to the second embodiment, the shared AP 20 can determine on/off of the Co-SR function based on the information of the subordinate terminal apparatus 30 and change the setting of the Co-SR function to be applied to the shared AP itself. As a result, the communication system 1 according to the second embodiment can efficiently use the Co-SR function and improve the effect of the power control.

### <3> Others

In the above embodiment, the sharing AP 10 may set on/off of the Co-SR function of all the subordinate shared APs 20 to the same setting or may set on/off thereof individually. The above embodiment shows the case where each terminal apparatus 30 establishes a multi-link with one shared AP 20, but the present invention is not limited thereto. The method of controlling on/off of the Co-SR function described in the above embodiment can be similarly executed even in a case where the terminal apparatus 30 is multi-AP connected. Further, the terminal apparatus 30 connected to the shared AP 20 may be a single-link device. Both the single-link device and the multi-link device may be connected to the shared AP 20. The determination unit 133 of the sharing AP 10 may determine whether to use the Co-SR function based on the information of the terminal apparatus 30 received via the subordinate shared AP 20.

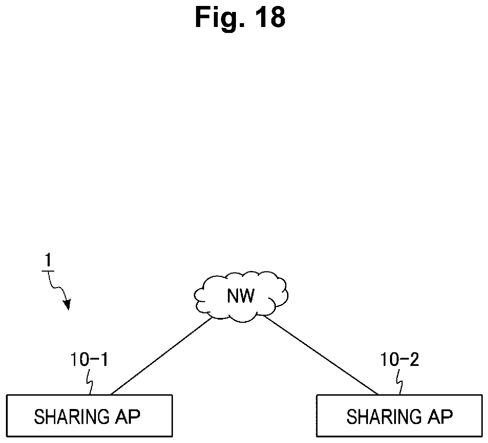

Fig. 18 is a block diagram showing an example of a configuration of a communication system according to a modification of the first embodiment. As shown in Fig. 18, the communication system 1 may include a plurality of sharing APs 10 connected via the network NW. In the present example, a sharing AP 10-1 and a sharing AP 10-2 are connected via the network NW. The plurality of sharing APs 10 may be connected by wire or wirelessly. The determination unit 133 of the sharing AP 10 and the determination unit 133 of another sharing AP 10 may exchange information of the shared AP 20 managed by each sharing AP and information regarding a determination result of on/off of the Co-SR function. Therefore, the communication system 1 according to the modification of the first embodiment causes the plurality of sharing APs 10 to cooperate with each other, thereby controlling on/off of the Co-SR function of the subordinate shared AP 20 of each sharing AP 10.

The conversion processing from a wireless frame into a wireless signal described in the above embodiments includes, for example, convolutional encoding processing, interleave processing, subcarrier modulation processing, inverse fast Fourier transform processing, OFDM modulation processing, and frequency conversion processing. The conversion processing from a wireless signal into a wireless frame described in the embodiments includes, for example, frequency conversion processing, OFDM demodulation processing, fast Fourier transform processing, subcarrier demodulation processing, deinterleave processing, and Viterbi decoding processing. In the present specification, BlockAck may be referred to as a reception confirmation frame. The BlockAck request may be referred to as a reception confirmation request frame.

In the above embodiments, the CPU 11 of the sharing AP 10, the CPU 21 of the shared AP 20, and the CPU 31 of the terminal apparatus 30 may each be another circuit. For example, the sharing AP 10, the shared AP 20, and the terminal apparatus 30 may each include a micro processing unit (MPU) or the like instead of the CPU. Each piece of the processing described in the above embodiments may each be implemented by dedicated hardware. The processing of the sharing AP 10, the shared AP 20, and the terminal apparatus 30 may each include processing executed by software and processing executed by hardware in combination or may include only one of the pieces of the processing. The CPU may be referred to as a "processor". The wireless communication module may be referred to as a "communication circuit".

The flowcharts used to describe the operation in the above embodiments are merely examples. Each operation described in the embodiments may be interchanged within a possible processing order, or other pieces of processing may be added. For example, the processing order of step S13 and step S14 in Fig. 9 may be interchanged. Similarly, the processing order of step S23 and step S24 in Fig. 15 may be interchanged. As the wireless communication standard, a wireless communication standard different from the IEEE 802.11 standard may be used.

The present invention is not limited to the foregoing embodiments, and various modifications can be made in the implementation stage without departing from the gist of the present invention. The embodiments may be implemented in appropriate combination, and in that case, the combined effect can be obtained. Further, the above embodiments include various inventions, and various inventions can be extracted by combinations selected from a plurality of disclosed components. For example, even if some components are deleted from all the components described in the embodiments, a configuration from which the components have been deleted can be extracted as an invention as long as the configuration can solve the problems and can obtain effects.

### Reference Signs List

1 Communication system
10 Sharing access point
20 Shared access point
30 Terminal apparatus
11, 21, 31 CPU
12, 22, 32 ROM
13, 23, 33 RAM
14, 24, 34 Wireless communication module
15 Wired communication module
35 Display
36 Storage
110, 310 LLC processing unit
120, 240, 320 Data processing unit
130, 220, 330 Management unit
131 Multi-AP management information
132, 221 Link management information
133, 222 Determination unit
140, 230-1, 230-2, 340 Frame processing unit
300 Application execution unit
351 MAC frame generation unit
352 Transmission/reception unit
353 MAC frame processing unit

## Claims

1. An access point comprising:
a communication circuit configured to be able to communicate with a plurality of access points; and
a processor configured to determine whether or not each of the plurality of access points uses a spatial reuse function based on information of each of the plurality of access points and apply a setting of the spatial reuse function based on a determined result to the plurality of access points.

2. The access point according to claim 1, wherein
the processor is further configured to determine whether to use the spatial reuse function in accordance with a number of access points that desire to use the spatial reuse function among the plurality of access points.

3. The access point according to claim 1, wherein
the processor is further configured to determine whether to use the spatial reuse function in accordance with a distance between two close access points among the plurality of access points.

4. The access point according to claim 3, wherein
the processor is further configured to determine whether to use the spatial reuse function in accordance with a number of access points using beamforming among the plurality of access points.

5. The access point according to claim 1, wherein:
the plurality of access points includes a first access point and a second access point; and
the processor is further configured to determine whether to use the spatial reuse function in accordance with a number of terminal apparatuses that are not detected by the second access point among terminal apparatuses detected by the first access point.

6. An access point in a communications system configured to transfer data between a subordinate terminal apparatus of the access point and an other access point via the access point, the access point comprising:
a communication circuit configured to be able to communicate with the other access point and a plurality of terminal apparatuses; and
a processor configured to determine whether to use a spatial reuse function based on information of each of the plurality of terminal apparatuses and apply a setting of the spatial reuse function based on a determined result.

7. The access point according to claim 6, wherein
the processor is further configured to determine whether to use the spatial reuse function in accordance with a number of terminal apparatuses that desire to use the spatial reuse function among the plurality of terminal apparatuses.

8. The access point according to claim 6, wherein
the processor is further configured to, in a case where a current setting of the spatial reuse function is different from the setting of the spatial reuse function based on the determined result, notify the access point of the setting of the spatial reuse function based on the determined result.
